# EUROPEAN PATENT SPECIFICATION

(11) **EP 0 469 778 B1**
(45) Date of publication and mention of the grant of the patent: **11.06.1997**
(21) Application number: 91306728.6
(22) Date of filing: 24.07.1991
(51) Int. Cl.: C08K 5/42, C08K 5/24, C08J 3/00

(54) **Method and composition for improving processability of rubber and plastics**
Methode und Zusammensetzung zur Verbesserung der Verarbeitbarkeit von Kautschuk und Kunststoffen
Méthode et composition pour l'amélioration de la mise en forme de caoutchouc et des matières plastiques

(30) Priority: 02.08.1990 US 561803
(43) Date of publication of application: 05.02.1992
(73) Proprietor: TECHNICAL PROCESSING, INC., Paterson, New Jersey (US)
(72) Inventor: Aguirre, Enrique, Hackensack, New Jersey 07601 (US); Yankner, Paul R., Englewood, New Jersey 07631 (US)
(74) Representative: Lambert, Hugh Richmond

(56) References cited:
- GB-A- 752 660
- US-A- 4 010 129
- US-A- 4 534 799

## Description

The present invention relates to a method and composition for processing rubber and plastics which improves release, processability, adhesion and tack, but which does not adversely affect such other physical properties of the rubber or plastic as tensile, elongation, modulus, etc. More particularly, the present invention relates to a composition and method for facilitating the release of rubber and plastic compounds so that lubricants need not be applied to the moulds in order to release moulded parts.

Natural and synthetic rubber compositions are typically comprised of mixtures of materials such as vulcanizing agents, plasticizers, extenders, fillers, pigments, and the like, which are then cured or vulcanized in a mould to form useful articles. Because crude rubber has a very high viscosity, it cannot be easily and quickly mixed with many of the aforementioned additives. In order to do so, the crude rubber must first be broken down into a soft, plastic state. This procedure, which is often referred to as mastication, involves mixing with a peptizer (plasticizer) while subjecting the rubber to heat. The peptized rubber is then cooled and then mixed with other additives.

The use of processing aids to facilitate the mixing of rubber and plastic compounds is generally known in the art. For instance, U.S. Patent No. 3,787,341, Reissue No. 29,821 (Aron), teaches the use of a certain homogenous mixture which, along with the other additives, is added directly to crude rubber in the mixing step and which eliminates the need for a separate mastication step. The homogenous mixture comprises an alkali metal salt of an aromatic sulfonic acid (e.g., potassium dodecylbenzene sulfonate) and a long chain fatty acid (e.g., steatic acid), and is added in an amount of from about 0.5 to about 2% by weight of the composition. Preferably, the homogenous mixture also includes such additional materials as aromatic esters, compounds with alcoholic and glycolic hydroxyl groups, potassium or sodium soaps of fats or fatty acids, other soaps of metals such as zinc, magnesium, calcium or barium, and a paraffin. U.S. Patent No. 3,882,062 (Aron) teaches that thioethers catalyze the action of the homogenous mixture.

U.S. Patent No. 4,534,799 (Aguirre) discloses a processing aid which enhances the wetting characteristics of natural and synthetic rubbers comprising a mixture of a partially neutralized, fatty-acid modified alkylbenzene sulfonic acid, a fatty acid amide, a normally-solid polyethylene glycol, a normally-solid low density wax, and a fluorinated surfactant. In addition, the processing aid can include an inert filler and/or carrier.

Lubricants such as silicones, fluorocarbons, and long chain alcohols, esters or soaps, have also been used in processing rubbers and plastics. Heretofore, such lubricants have been primarily used externally, i.e., applied to the surfaces of molds, dies, etc. Fluorocarbon lubricants are excellent lubricants, but their reaction with most elastomers is extremely limited because of their low surface energy. Mixing fluorocarbons directly (internally) into rubber or plastic may cause serious loss of adhesion and tack, as well as adversely affect other physical properties. Accordingly, fluorocarbon lubricants can be added internally to the rubber or plastic only in such small amounts that they provide little or not improvement in processing and release.

Silicone fluids or resins have also been used as lubricants or release agents, but like fluorocarbons, frequently do not possess acceptable compatibility with rubbers and plastics. Mixing these silicone lubricants directly (i.e., internally) into rubber or plastic compounds, even at small concentrations, can cause serious loss of tack and adhesion. A further disadvantage is that the silicone bleeds out the vulcanizate.

In accordance with the present invention, the processability and releasability (from molds) of rubber and plastic compounds, including the dispersibility of other compounds therein, is improved by incorporating into the rubber or plastic compound a preblended processing aid comprising a silicone fluid lubricating agent together with a peptizing agent, as defined in claim 1.

Preblending of the lubricating agent with the peptizing agent permits the use of large concentrations of normally unusable silicone lubricants by rendering them compatible with the rubber or plastic without comprising the physical properties of the rubber or plastic such as adhesion, tack, tensile strength, modulus, elongation, flexing or compression set. Use of the method of the present invention on rubbers (both natural and synthetic) and plastics eliminates or reduces the need to spray mould lubricants onto mould surfaces to permit release of moulded parts. The invention further allows for better dispersion of other compound ingredients into rubber or plastic compounds by reducing the viscosity of the rubber and plastics so as to facilitate the mixing thereof. In addition, better wetting for pigments and fillers which are added to the rubber or plastic is provided and the tendency of the rubber or plastic to stick to the mill roll during processing is reduced. Rubber treated in accordance with the method of the invention also exhibits better resistance to degradation caused by ozone and oxygen and improved physical properties.

The lubricating agents used in one embodiment of the present invention are the class of silicone fluids and resins known as general purpose silicones. General purpose silicone resins and fluids do not have terminal functional groups and, therefore, they are materials of very low reactivity in the presence of other chemicals. However, reactivity of the silicone lubricant is not required in the present invention.

Substituents on the silicon atoms of general purpose silicones consist exclusively of methyl groups or oxygen. The termination of the polymer chains prevents viscosity change and other alterations to physical properties. The simplest of these silicone fluids are the trimethylsiloxy terminated polydimethylsiloxanes which exhibit the following basic structure: 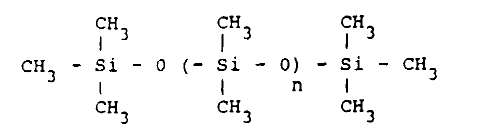 These basic general purpose silicones range in molecular weight from about 200 to over 400,000. The fluids are thermally stable indefinately at 150°C. It has been found that high viscosity silicone fluids and resins, between 5,000 to 60,000 centistokes (5 to 60 Pa.s) are useful as lubricants.

The polydimethylsiloxanes are preferred for use in the invention because their large molecular weight allows them to impart excellent lubricating properties to rubber and plastic. In addition, the polydimethylsiloxanes are readily available at a low cost. Examples of commercially available general purpose polydimethylsiloxanes which can be used in the invention are Viscacil 10M and Viscacil 30M from the General Electric Co.

Although the general purpose silicones are preferred because of their low cost and broad range of molecular weights, the silicone used as a lubricating agent in this invention can also be a functionally terminated silicone fluid or resin, typically having a viscosity of from 5000 to 60,000 centipoise. Such compounds can be represented by the general formula: 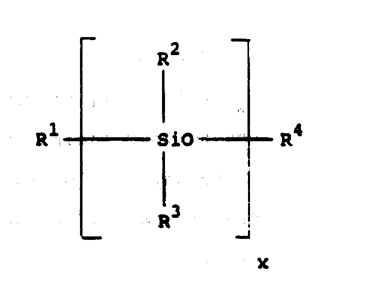 wherein each of R¹, R², R³ and R⁴ is a hydrocarbyl, e.g., alkyl or aryl, or hydrocarboxy, e.g., alkoxy or aryloxy, group, and at least one of which is substituted with a functional group and x is an integer determined by the size of the silicone lubricant. Typical functional groups are amine or hydroxyl groups, with primary amine groups being preferred.

In most commercially-available silicone lubricants, the R¹, R², R³ and R⁴ moieties are alkyl of up to about 10 carbons or phenyl. As a general rule, these moieties are predominantly, or entirely methyl.

The moiety containing the functional group can be alkyl or aryl, but commonly is aminoalkyl, e.g., aminopropyl, or hydroxyalkoxy, e.g., 2-hydroxyethoxy. Amine-terminated functional silicone fluids are especially preferred.

Examples of commercially available functionally terminated silicone fluids which are useful in this embodiment of the invention include methylalkyl siloxanes such as SF 1080, commercially available from General Electric Co.; and a polydimethylsiloxane of about 5000 CPS (5 Pa.s) viscosity such as Dow Corning 193, commercially available from Dow Corning Corp.

Aromatic modified silicones, those containing a phenyl group which is introduced as a phenylmethylsiloxane or a diphenyl siloxane according to the formula: 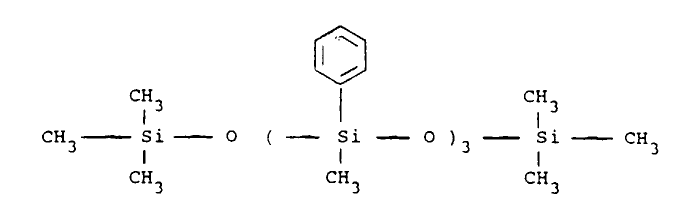 have been found to be of use in this invention. They improve lubricity, oxidation resistance, thermal stability and may work in a service temperature between -55°C to 290°C.

The invention utilizes a peptizing agent in combination with the lubricating agent to render the lubricating agent compatible with the rubber or plastic. The peptizing agent is preblended with the lubricating agent prior to incorporation into the rubber or plastic. In general, peptizers are known in the art to be materials which accelerate the softening (i.e., breakdown of viscosity) of rubber upon mastication (i.e., degradation). These substances are occasionally designated as "radical acceptors" when they facilitate the mechanochemical scission of rubber during cold mastication or "promoters of oxidative scission" of rubber when they facilitate mastication of rubber at elevated temperatures. We refer to them as chemical peptizers.

Examples of chemical peptizers commercially available used according to the present invention include: thiazole accelerators (for example, mercaptobenzothiazole and cyclohexybenzothiazole sulphenamide); phenyl hydrazine (and its derivatives which are known peptizers) ; the known class of alkyl and aryl mercaptan peptizers (for example, xylyl mercaptan and pentachlorothiophenol and its salt, zinc pentachlorothiophenate). Other commercially available peptizers which can be used in this invention are dithio-bisbenzanilides and N-tallow alkyltrimethylenediamine oleates.

The peptizing agent used in the invention can also be an alkylbenzene sulfonic acid (a plasticizing type peptizer) which is represented by the structural formula: 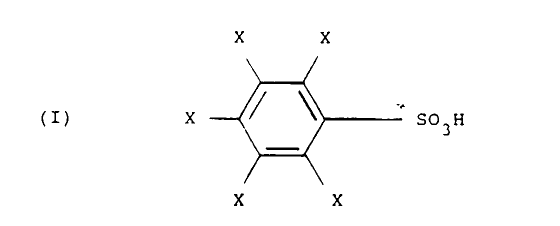 wherein each X, independently, is hydrogen or straight or branched chain alkyl of up to 14 carbon atoms, provided that at least one X is alkyl. Each X preferably contains at least 4 carbon atoms. Preferred alkylbenzene sulfonic acids are represented by the formula: 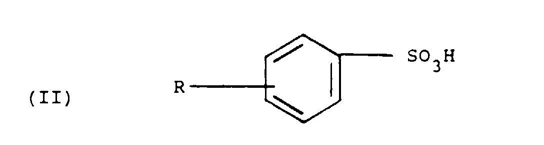 wherein R is branched or straight chain alkyl of from about 8 to about 12 carbon atoms. Dodecylbenzene sulfonic acid is illustrative and preferred.

One class of compounds which is not known in the art to be peptizers but which, it has been discovered, can be used along with the peptizing agent in the present invention, are salts of long chain fatty acids (i.e., fatty acids having from about 14 to about 22 carbon atoms). In particular, metal salts of oleic, stearic and palmitic acid are preferred. Zinc salts such as zinc oleate are especially preferred because zinc has a good affinity for rubber and silicone fluids. The presence of these salts in the processing aid is not necessary, however, their presence with the peptizing agent improves compatibility of the lubricating agent with the rubber or plastic.

Other substances which can optionally be used in the processing aid of the invention are neutralized reaction products of an alkylbenzene sulfonic acid with a fat, such as those disclosed in U.S. Patent No. 4,534,799 (Aguirre) and U.S. Patent No. 3,787,341, Reissue No. 29,821 (Aron). As more fully described in the '799 patent a partially-neutralized, fatty-acid modified alkylbenzene sulfonic acid useful as a rubber processing aid can be produced by heating at an elevated temperature an alkylbenzene sulfonic acid whose alkyl group contains from 10 to 14 carbon atoms with a saturated or unsaturated long chain fatty acid having from about 14 to about 20 carbon atoms in a weight ratio of fatty acid to sulfonic acid of at least about 1:1 until the pH of the resulting mixture is from about 2 to about 3, and thereafter adding base to adjust the pH of the mixture to from about 4.5 to about 6.5. One particularly preferred substance which acts as a peptizer is X-100^{TM}, a proprietary processing aid which is commercially available from Technical Processing, Inc., Paterson, N.J.X-100^{TM} is made by reacting 15 parts of dodecylbenzene sulfonic acid with 60 parts of lanolin, neutralizing with 7 parts of triethanolamine and adding 18 parts of isopropyl myristate.

Without intending to be bound by any theory, it is believed that the use of a peptizer as a modifying agent for the silicone resin also promotes rubber crosslinking. By increasing the crosslinking density, independent of the curing agent used, in the case of rubber usually sulphur, allows new and additional sites of crosslinking. The physical properties such as tensile, modulus, elongation, flexing, compression set and resistance to oxygen and ozone degradation are noticeably improved. Properties such as adhesion, tack, and release, which are usually compromised, are also improved by this increase in cured crosslinking density.

The ratio of peptizing agent to lubricating agent in the processing aid is such that it is sufficient to render the lubricating agent compatible with the rubber or plastic to which it is to be added. The ratio of the amount of silicone resin to peptizer in the processing aid is preferably from 1 : 0.20 to 3 : 0.20 by weight.

When the lubricating agent is a functionally-terminated silicone fluid with a terminal primary amine and when the peptizing agent is alkylbenzene sulfonic acid, it has been found that good results are achieved when the proportions are such that there is at least one sulfonic acid group (-SO₃H) per primary amine group (-NH₂). The ratio can be as high as 5 to 1, or even higher, but normally ratios of from 1:1 to 2:1 are preferred. When the sulfonic acid is dodecylbenzene sulfonic acid and the silicone resin is an amine terminated resin the weight ratio of dodecylbenzene sulfonic acid to silicone resin can vary from 1:1 to 5:1, but preferably is in the range of from 1:1 to 3:1.

Where the peptizing agent is an alkylbenzene sulfonic acid, it is possible (but not necessary) to obtain a reaction product with a functionally terminated silicone fluid to obtain the processing aid. In this embodiment at least one hydrocarbyl or hydrocarboxy group of the silicone lubricant must be capable of reacting with the sulfonic acid. The reaction product of this embodiment is obtained by mixing the alkylbenzene sulfonic acid with the silicone lubricant, and heating the mixture at a temperature sufficient to allow reaction to occur. Because water is formed in the reaction, it is also desirable to employ conditions allowing removal of water. Thus, the reaction is desirably carried out at a temperature greater than 100°C at ambient pressure, thereby allowing water to distill off.

In preferred embodiments of the present invention, other materials are added to the rubber or plastic blend in addition to the lubricating agent and the peptizing agent. These other materials can be compounds with alcoholic groups, compounds with glycolic hydroxyl groups, fatty acids and their esters and ethers, fatty acid amides (including dimers and trimers), waxes, organic amines, wetting agents, fluorosurfactants, inert fillers, and mixtures thereof.

Other components of a preferred processing aid based upon the mixture of the lubricating agent and the peptizing agent (or the reaction product of the lubricating agent and the peptizing agent as the case may be) of this invention include compounds with alcoholic or glycolic hydroxyl groups, fatty acids and their esters or salts, fatty acid amides, waxes, other wetting agents and surfactants, and fillers.

The fatty acid which may be employed in this invention is a saturated or unsaturated long chain fatty acid, typically one having from 14 to 22 carbon atoms. Illustrative fatty acids include palmitic acid, oleic acid, stearic acid, myristic acid, and the like.

The fatty acid may be pure, but it has been found that a fatty acid-containing mixture such as lanolin may be employed as well, provided it has sufficient fatty acid content, i.e., 9 to 30 weight percent fatty acid. These products also include alcohols and waxes which do not interfere with the use of the resulting product as a rubber processing aid and impart useful properties to the processing aid.

The fatty acid esters may include the same or different fatty acids as discussed above. It is preferred to add an isopropyl ester of a long chain fatty acid having from 14 to 22 carbon atoms. Illustrative esters include isopropyl myristate and isopropyl palmitate.

The fatty acid amide which is employed in this preferred composition is one known heretofore as a lubricant for rubber, and may be represented by the formula: 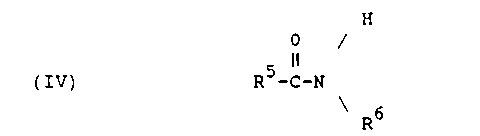 wherein R⁵ is a straight or branched alkyl or alkenyl group having from about 8 to about 22 carbons and R⁶ is hydrogen or a 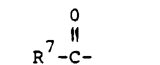 group wherein R⁷ is a straight or branched alkyl or alkenyl group having from 8 to 22 carbon atoms, and wherein R⁵ and R⁷ may be the same or different. Illustrative of these amides are stearamide, erucamide, oleamide, stearyl erucamide, oleyl palmitamide and erucyl stearamide.

In general, primary amides such as stearamide, oleamide, erucamide and behenamide are preferred. The release, slip, anti-tack and anti-block properties afforded to the elastomers and plastics when fatty amides were added in the past are noticeably enhanced by the reaction of the fatty acid amide with alkylbenzene sulfonic acid. This enhancement of effect causes a reduction in the amount of amide needed in the polymer.

The compounds having alcoholic and glycolic hydroxyl groups include straight or branched chain aliphatic alcohols having from 8 to 20 carbons in the chain, alkyl phenoxy ethers of glycols or polyglycols wherein the alkyl group is limited to about 12 carbons in the chain and the polyglycol does not contain more than about 6 ethyleneoxy (CH₂-CH₂-0-) groups, or polypropylene glycol of about three propylene oxide groups in the molecule. Illustrative compounds include 2-ethylhexanol, cetyl alcohol, stearyl alcohol, nonylphenoxyglycol, nonylphenoxydiglycol, nonylphenoxytetraethylene glycol, dodecylhexaethylene glycol, propylene glycol, dipropylene glycol, tripropylene glycol, and nonylphenoxytridecylethylene glycol.

The wax employed may be a natural or synthetic wax. Synthetic waxes which may be employed are low density, low molecular weight and low crystalline polyolefin waxes. Preferred polyolefin waxes are polyethylene waxes having a density of from about 0.9 to about 0.93 gm/cm³, a viscosity of from about 40 to about 500 centipoise (at 140°C -- Brookfield), and a melting point of from about 90°C to about 110°C, and preferably from about 100°C to about 102°C. Suitable polyethylene waxes are available from Allied Corporation under the designation "A-C Polyolefins", and include products designated AC617, AC617A, AC6, AC6A, AC7, AC7A, AC8, AC8A, AC9, AC9A, AC712, AC715, AC725 and AC735.

Natural waxes which may be employed are those having melting points in the range of from about 5°C to about 90°C, and include mink wax, montan wax, paraffin wax, beeswax, and lanolin wax. When a wax-containing fatty acid is included, e.g., lanolin, the wax present in the fatty acid may provide some or all of the natural wax content. Lanolin may substitute for some of the amides or polyethylene, because it enhances the release qualitites of the rubber in a fashion similar to the amides and polyethylenes. The substitution of the natural waxes for the polyethylene wax will cause little change in the releasing ability of the present lubricants.

Wetting agents of different types may also be included in the compositions of the present invention in order to improve the wetting quality of the elastomer. The particular wetting agent used will depend upon the particular application of the processing aid. The wetting agent may be anionic, cationic, nonionic, or amphoteric.

The wetting agent preferably is at least in part comprised of a surfactant such as a fluorosurfactant. Fluorosurfactants as defined herein include aliphatic fluorocarbon chains (e.g., chains of the formula -CₙF_{2n + 1}) which impart reduced surface tension and improved wetting characteristics. Examples of suitable fluorosurfactants include nonionic fluorosurfactants, anionic fluorosurfactants, cationic fluorosurfactants, fluorinated alkyl esters and ammonium perfluoralkyl sulfonate, among others.

In addition to the above active components, the processing aids of the present invention can contain an inert filler and/or carrier. Suitable fillers include diatomite or fullers earth, various clays, calcium carbonate, talc, aluminum trihydrate, kaolin, silica, shell flour, bentonite and silicon dioxide.

The inclusion of different materials in the processing aid of the present invention such as zinc stearate, stearamide, dimer acids, fatty acids, etc., may render the preparation acidic. It may be necessary to neutralize with various alkylolamines such as mono-, di- and tri-methanolamine, mono-, di-, and tripropanol amine, 2-(diethylamino)ethanol, 2-(butylamino)ethanol, 2-(methylamino)ethanol, and 2-(ethylamino)ethanol.

The use of a difunctional amine as a neutralizer or modifier in rubber compounds has proven to be of considerable importance in order to improve properties such as tensile strength, modulus, tear resistance and flexural strength. Polyamines which are useful with this invention include ethylene diamine, diethylene triamine, triethylene tetramine, and tetraethylene pentamine.

The basic formula can be modified such that processing aids suitable for elastomers can be made into plastic compatible formulations. In the case of elastomers, formulas with low pH impart better processing and produce better compatibility between rubber and such materials as silicone and fluorocarbon resins.

Formulations for plastics are very similar to those for rubbers, except that the pH of the formulas for plastics should be near neutral. The neutralization can be effected in any convenient way, using inorganic or organic bases. It is preferred, however, to employ the aforementioned organic amines because the resulting partially neutralized product is not as viscous as a product neutralized with an inorganic base. Preferred amines are lower alkyl or hydroxy lower alkyl primary, secondary and tertiary amines, in particular, those where the alkyl group is ethyl or propyl. Hydroxyalkylamines, such as ethanolamine, triethanolamine, isopropanolamine and the like are preferred. A mixture of amines, such as a mixture of isopropanolamine, diisopropanolamine and triisopropanolamine has also been found useful.

In the method of the invention the processing aid is first prepared by mixing the selected compounds in a convenient fashion, as by stirring to achieve a uniform mixture. However, the processing aid may be prepared by any method known in the art. What is essential to achieve good results is that the lubricating agent and the peptizing agent be preblended prior to being incorporated into the rubber or plastic. It is believed that the lubricating agent is modified by the peptizing agent during preblending. When silicone lubricants are added alone to a rubber compound, the physical properties of the rubber are compromised even if a peptizing agent had been previously incorporated into the rubber.

The amounts of the various ingredients in the processing aid of the present invention will vary depending upon the properties of the individual ingredients, and the properties desired in the processing aid.

The processing aid of the present invention may be added to crude rubber in the mixing cycle prior to the mastication step, but should be added no later than the compounding steps of the rubber processing.

A preferred processing aid for use in the invention would include 45 to 70 parts by weight zinc oleate, 10 to 20 parts by weight of aklylbenzene sulfonic acid 15 to 20 parts by weight tripropylene glycol and 5 to 15 parts by weight of a general purpose silicone.

In another preferred embodiment of the present invention, a processing aid for elastomers comprises the reaction product of a mixture comprising from 2 to 18 percent of an alkylbenzene sulfonic acid and from 2 to 25 percent of a functionally terminated siloxane, in admixture with from 5 to 25 percent wax, from 3 to 20 percent of an alcoholic or glycolic hydroxyl compound, from 5 to 15 percent of a fatty acid amide, from 1 to 10 percent of a wetting agent, from 0 to 30 percent of a fatty acid ester, from 0 to 30 percent of a fatty acid, from 0 to 3.5 percent of an organic amine, and up to 60 percent of a suitable inert filler. Preferably, the wetting agent comprises a fluorosurfactant, and the wax comprises a mixture of mink wax and polyethylene wax.

In another preferred embodiment of the present invention, a processing aid which can be used for either elastomers or plastics, comprises the reaction product of from 2 to 7.5 percent of an alkylbenzene sulfonic acid, with from 2 to 25 percent of a functionally terminated siloxane, in admixture with from 5 to 10 percent wax, from 1 to 30 percent of a wetting agent, from 2 to 10 percent of a fatty acid amide, from 1 to 10 percent of an alcoholic or glycolic hydroxyl compound, from 0 to 3.5 percent of an organic amine, from 0 to 9 percent of a fatty acid ester, and up to 60 percent of a suitable inert filler. The processing aid in this embodiment is adapted for use with elastomers when it has an acidic pH, preferably a pH of about 3. It is rendered useful for plastics when it has a pH near neutral, and preferably a pH of between 6 to 8.

Preferably, the wetting agent in this embodiment comprises a fluorosurfactant and one or more other surfactants which may be anionic, cationic, nonionic or amphoteric, depending upon the needs of the particular application. Most preferably, the processing aid comprises from 1 to 10 percent of a block polymer nonionic surfactant such as a poly(oxyethylene-co-oxpropylene) nonionic surfactant and from 1 to 10 percent of a fluorosurfactant.

The amount of processing aid of the present invention needed to achieve the improved processing or release of the rubber compositions ordinarily is from 0.5% to 10% based on the total weight of the rubber composition, and other compound ingredients. Preferably, from 1 to 2% of the processing aid is added.

The rubbers which can be improved with the processing aid of the invention include, but are not limited to, butadiene-styrene copolymers, polychloroprene and chloroprene copolymers, polyisoprene and isoprene copolymers, modified polyethylene, polyacrylate and acrylate copolymers, polyesters and modified polyesters, silicone rubbers, Hypalon, Hydrin rubbers, natural rubbers, etc. The invention is particularly useful with those elastomers having a tendency to crystallize under tension.

One important physical property of polymers improved by the processing aid of the present invention is tack. This is due to the increased mobility of the rubber due to a lowering of its molecular weight by the peptizing action of the processing aid. The rate of mobility is increased as the molecular weight is decreased.

Surprisingly, in addition to improved tack, excellent release is obtained. Such properties are opposite to each other and do not normally go together without adversely affecting adhesion, especially when silicones were added in prior art formulations. The formulations of the present invention, through their peptizing action, provide lower polymer molecular weight. In addition, they improve tack and adhesion.

Another important processing requirement in elastomers is the ability to form a tight band on the mill rolls which at the same time helps in the mechanical chain scission of the polymer. The use of the processing aid of the present invention helps to achieve not only better tack, adhesion and dispersion but also lowers viscosity, which may be defined as the ratio of shear stress to shear rate.

Physical strength such as tensile, modulus, elongation, flexing and compression set, are generally improved by the use of the products of this invention. This effect is enhanced by the excellent wetting and dispersion they provide, making possible the use of very fine particle-size carbon blacks which considerably increase reinforcing properties. Low cost fillers, such as clay, can therefore be loaded at higher concentrations in rubber and plastic compounds than previously possible.

The processing aids of the present invention also allow the modification of the surface of the rubbers or plastics to which they are added. This effect may be the result of the addition of low surface energy materials to the rubbers or plastics. In elastomers, the resistance to oxidation and ozone is markedly improved. A more predictable activity when compared to rubber containing silicones, waxes, and fluorocarbons without peptizing agents, is another benefit. The results obtained with the present invention are generally reproducible with different types of rubbers, plastics and resins.

The present invention will now be described in detail with reference to the following examples which are illustrative of the invention. All parts and percentages are by weight unless otherwise specified.

### EXAMPLE 1

Seven different processing aids suitable for use with elastomers were prepared in accordance with the invention to determine their effect upon rubber. The components of the individual samples are set forth below in parts by weight:

| | 1 | 2 | 3 | 4 | 5 | 6 | 7 |
|---|---|---|---|---|---|---|---|
| Zinc Oleate | 22.5 | 19.5 | 19.5 | 20 | 19.5 | 19.5 | 19.5 |
| X-100 | 10.8 | 9.4 | 9.4 | 9.6 | 9.4 | 9.4 | 9.4 |
| Tripropylene Glycol | 13.5 | 11.7 | 11.7 | 12 | 11.7 | 11.7 | 11.7 |
| polydimethylsiloxane (Viscacil 10M) | 23.5 | 21.1 | 21.7 | 32 | 21.7 | 21.7 | 21.7 |
| Waxes (mink wax and cetyl alcohol); Stearamide; and fluorosurfactant | 29.7 | 25.7 | 25.7 | 26.4 | 25.7 | 25.7 | 25.7 |

| Peptizers | | | | | | | |
|---|---|---|---|---|---|---|---|
| dithiobisbenzanilide #80 | - | 12 | - | - | - | - | - |
| N-tallow alkyltrimethylenediamine oleates | - | - | 12 | - | - | - | - |
| dithiobisbenzanilide #44 | - | - | - | - | 12 | - | - |
| pentachlorothiophenol | - | - | - | - | - | 12 | - |
| Dodecylbenzene sulfonic acid | - | - | - | - | - | - | 12 |

Each processing aid was prepared as follows. The X-100^{TM} was made by mixing 15 parts of dodecylbenzene sulfonic acid with 60 parts of lanolin, heating the mixture at a temperature of about 250°F (121°C) for about 1 hour, neutralizing the resulting mixture with 7 parts of triethanolamine, and adding 18 parts of isopropyl myristate with stirring. The X-100 was added to a kettle and heated to a temperature of 220°F to 230°F (104° to 110°C). The mirk wax, cetyl alcohol, steramide and fluorosurfactant were then added to the X-100 with stirring. The resulting mixture was cooled to about 190°F to 200°F (88° to 93°C) whereupon the Viscacil 10M polydimethylsiloxane (molecular weight of 10,000), zinc oleate and additional peptizers (if present) were added with stirring.

Each processing aid sample was then incorporated into rubber in accordance with the invention to form seven rubber samples. Each of the seven rubber samples and a control rubber (containing no processing aid) were then processed into radial tire tread. Results of various tests conducted on each of the samples and the control during and after processing are reported in tables 1 and 2.

It can be seen from the results that the seven rubbers treated with the processing aids exhibited much better dispersion than the control. In addition, the rubbers in accordance with the invention exhibited greater resistance to oxygen and ozone degradation than the control. On the average, the rubber in accordance with the invention also exhibited better releasibility (as measured by the number of grams to release it from the mold) than the control. Furthermore, it can be seen that the method of the invention reduced the Mooney viscosity of the rubber samples thereby facilitating mixing.

It can also be seen from the results reported in tables 1 and 2 that the physical properties of the seven rubber samples were not adversely affected, and in some cases were improved, notwithstanding the fact that they were formulated with a general purpose silicone lubricant. In fact, it was surprising to discover that, on the average, the tensile strength, modulus, elongation and adhesion of the rubber samples in accordance with the invention were actually better than the corresponding properties in the control.

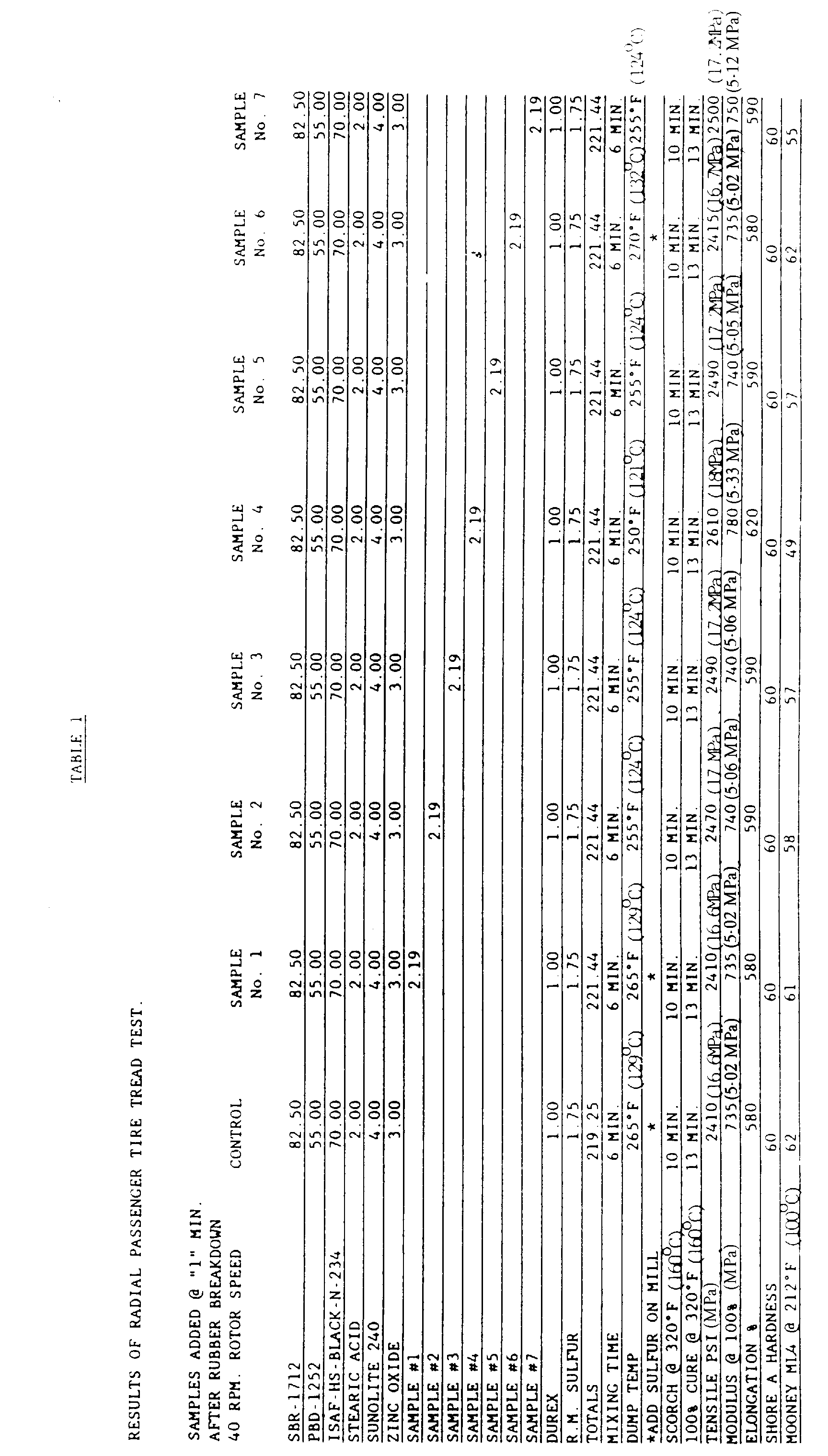

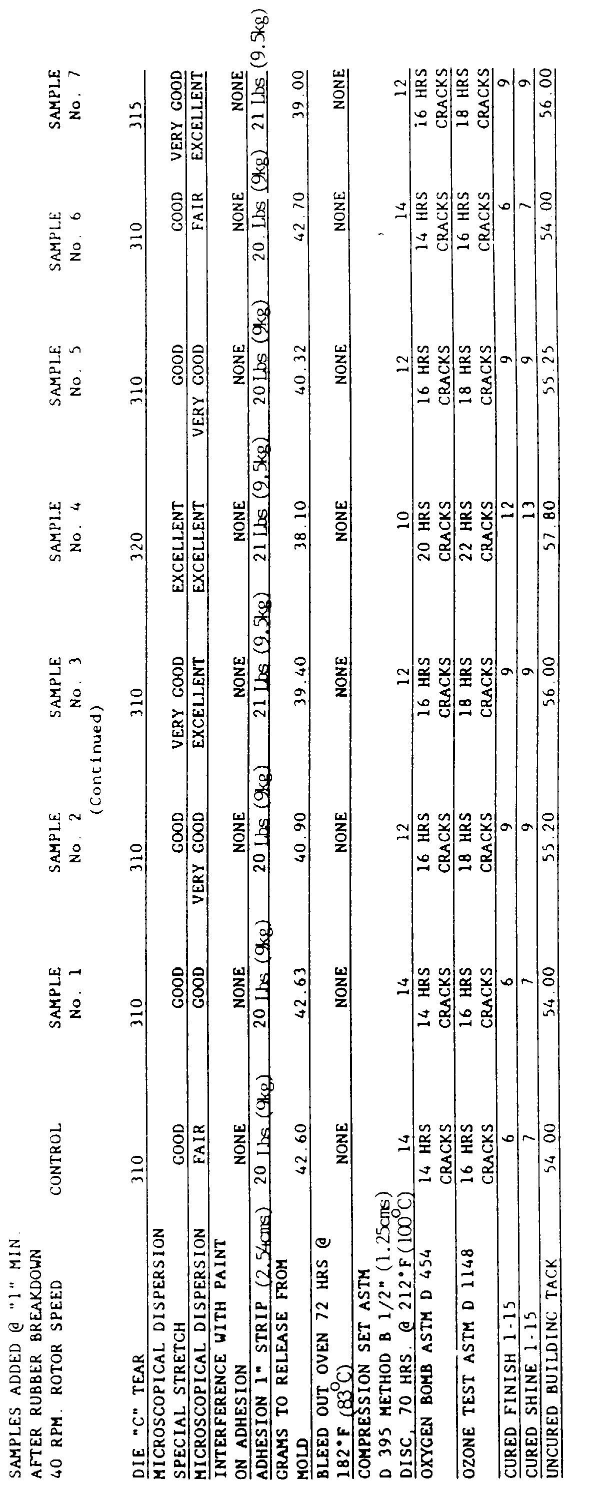

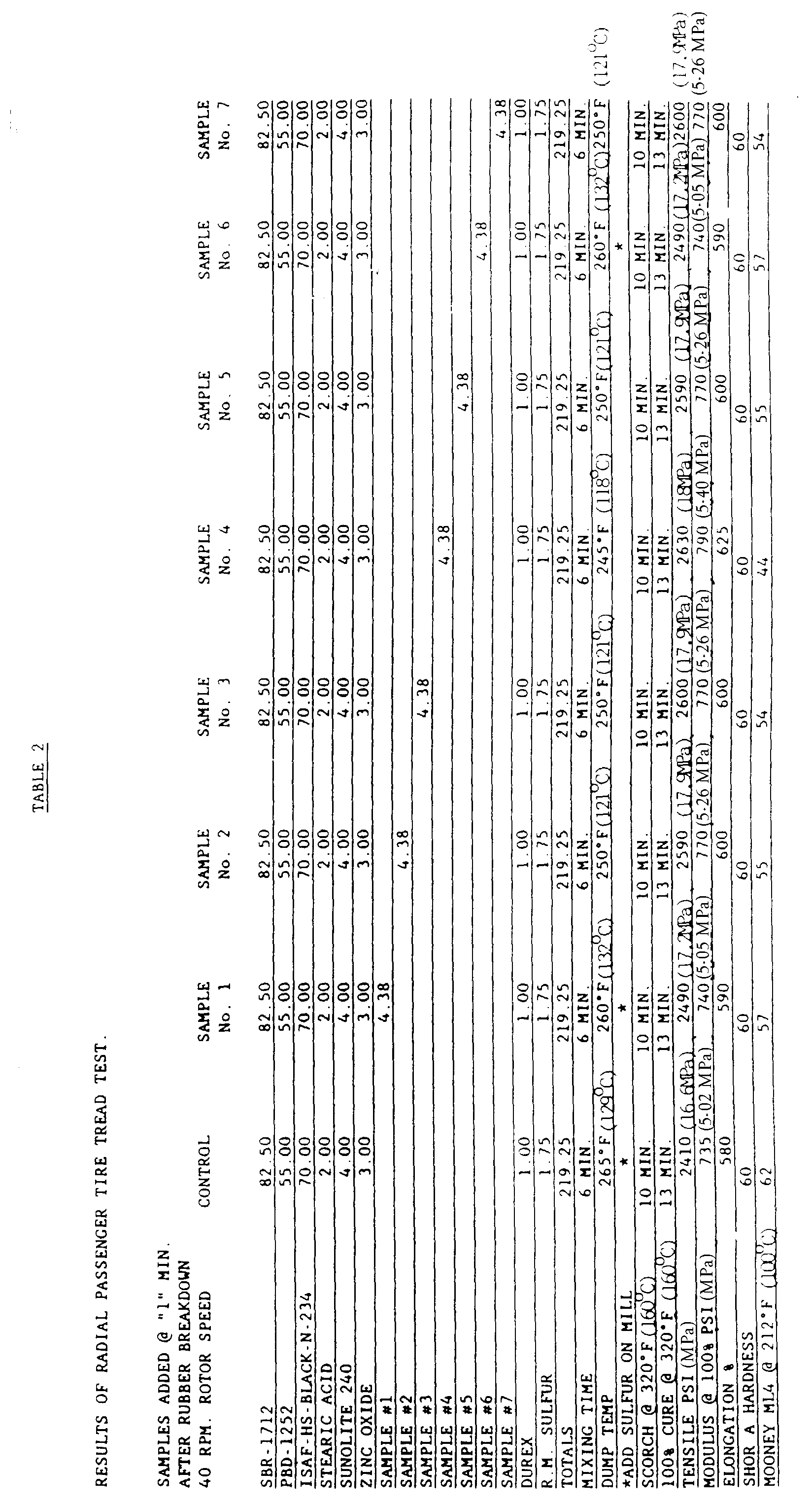

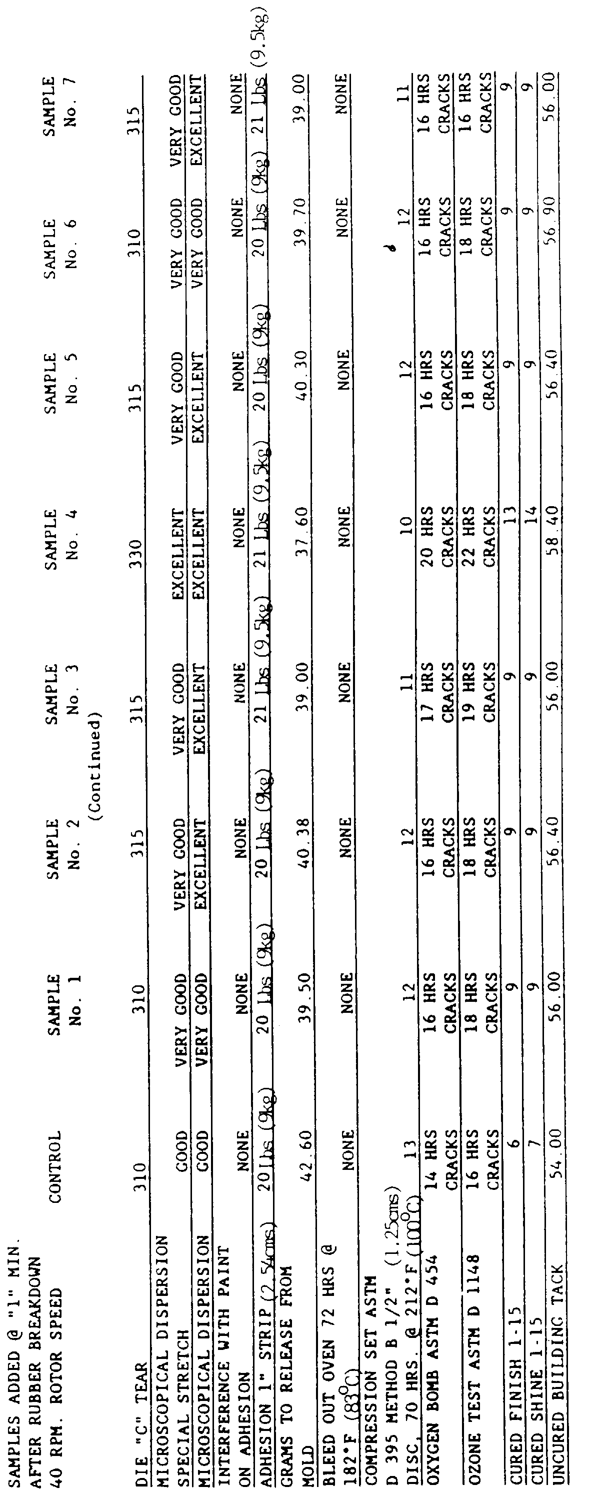

### EXAMPLE 2

### Processing Aid For Elastomers

A processing aid suitable for use with elastomers was prepared by adding dodecylbenzene sulfonic acid and a silicone resin to X-100™, a proprietary processing aid commercially available from Technical Processing, Inc., Paterson, N.J., and which is the subject matter of U.S. Patent No. 4,534,799. The X-100 was prepared in the same manner as in Example 1.

15 parts of the X-100™ were added to a kettle and heated to a temperature of about 220-230°F, (115-174°C) whereupon 10 parts of mink wax, 15 parts of cetyl alcohol, 15 parts of stearamide and 5 parts of FC-430™, a fluorosurfactant commercially available from 3M company, were added with stirring. The resulting mixture was then cooled to about 190-200°F (88-93°C) and 15 parts of SF 1080, an amine terminated proprietary silicone resin referred to in the trade as a methylalkyl silicone resin, available from General Electric Co. and 15 parts of dodecylbenzene sulfonic acid were added with stirring. The resulting mixture was stirred for one hour, with evolution of heat, at a temperature of 220°F (115°C). The mixture was then cooled, removed from the kettle and sprayed onto 10 parts of powdered silica having a partical size of 2 to 5 microns, thus forming a dry, free-flowing powder.

### EXAMPLE 3

### Processing Aid For Elastomers

Employing procedures similar to those described in Example 2, a processing aid suitable for use with elastomers was prepared by adding 10 parts of mink wax, 15 parts of cetyl alcohol, 15 parts of stearamide, and 4 parts of FC-430™ fluorosurfactant to 15 parts of X-100™. The resulting mixture was cooled to about 190-200°F (88-93°C) and 4 parts of SF 1080 methylalkyl silicone resin and 15 parts of dodecylbenzene sulfonic acid were added. The mixture was held with stirring, for one hour at 220°F (115°C) with the evolution of heat. The resulting mixture was cooled and sprayed onto 22 parts of a mixture of 6 parts of silica, having a particle size of 2.5 microns, and 16 parts of clay, having a particle size of less than 2 microns, thus, forming a dry, free-flowing powder.

### EXAMPLE 4

### Processing Aid for Elastomers and Plastics

A processing aid suitable for use with both elastomers and plastics was prepared by mixing 31.75 parts of a dimer acid resin, 4 parts of SF 1080 methylalkyl silicone resin, 5.75 parts of FSO™ fluorosurfactant, 10.75 parts of octyl isononanoate, 5.75 parts of mink oil, 5.75 parts of Pluronic L-62™ [a poly(oxyethylene-co-oxypropylene) nonionic surfactant available from BASF Wyandotte Corp.], 5.75 parts of isopropyl palmitate, 13.75 parts of propylene glycol, and 7.75 parts of nonylphenoxytridecyl ethylene glycol. The dimer acid resin was prepared by mixing 5.36 parts of dodecylbenzene sulfonic acid, 21.45 parts of a dimer of stearic and oleic acids, 6.44 parts of isopropyl palmitate, and 2.5 parts of triethanolamine in a kettle and heating the mixture at about 190 °F (88°C) for about 1 hour. The resulting mixture was sprayed onto 22 parts of a mixture of 6 parts of silica and 16 parts of clay, thus, forming a dry, free-flowing powder.

### EXAMPLE 5

### Processing aid for Elastomers

The pH of the processing aid produced as described in Example 4 was lowered to about 3 by adding dodecylbenzene sulfonic acid before it was sprayed onto the silica clay carrier, to provide a processing aid which imparts lower viscosity, better wetting, and better dispersion to elastomers.

### EXAMPLE 6

### Processing Aid for Elastomers

Employing procedures similar to those described in Example 1, 7.5 parts of mink wax, 7 parts of stearamide, 16 parts of cetyl alcohol, 5 parts of Zonyl FSN™ fluorosurfactant, 7 parts of polyethylene wax, and 16 parts of zinc stearate were added to 5.5 parts of X-100™. Next, 4 parts of dodecylbenzene sulfonic acid and 2 parts of SF 1080™ silicone resin were added, and the mixture was stirred for one hour at 220°F (115°C) with evolution of heat. The resulting mixture was sprayed onto 30 parts of powdered silica having a partical size of 2 to 5 microns, thus forming a dry, free-flowing powder.

Next, 1.74 g of the resulting processing aid was added to a rubber compound comprising 30 g of standard Malaysian rubber, 10 g of PBD-1228™ (a polybutadiene rubber available from Firestone Co. which consists of an oil/rubber formula with 8 parts carbon black per 92 parts rubber), 55 g of SBR-1551™ (a styrene-butadiene rubber available from Goodyear Co. which consists of 6 parts oil per 94 parts rubber), 1.25 g of stearic acid, 9 g of a processor/extender (Sundex™, available from Sun Chemical Corp.), 5 g of zinc oxide, 3 g of sulfur, and 0.7 g of an accelerator for the sulfur (Santocure™, available from Monsanto). The resulting composition was mixed until a homogenous composition was achieved.

The physical properties of the resultant rubber composition were then determined, and are reported in Table 3.

### EXAMPLE 7

### Processing Aid for Elastomers

Employing procedures similar to these described in Example 2, a processing aid was prepared by adding 7.5 parts of mink wax, 7 parts of stearamide, 16 parts of cetyl alcohol, 5 parts of Zonyl FSN™ fluorosurfactant, 7 parts of polyethylene wax, and 16 parts of zinc stearate to 5.5 parts of X-100™. Next, 8 parts of dodecylbenzene sulfonic acid and 4 parts of neutralized SF 1080 silicone resin were added, and the mixture was stirred for one hour at 220°F (115°C) with evolution of heat. The resultant mixture was sprayed onto 24 parts of powdered silica having a partical size of 2 to 5 microns, thus forming a dry, free-flowing powder.

1.74 g of the resulting processing aid was added to the same rubber compound identified in Example 5, and mixed until a homogenous composition was achieved.

The physical properties of the resulting cured rubber composition were then determined and are reported in Table 3.

### EXAMPLE 8

### Processing Aid for Elastomers

Employing procedures similar to those described in Example 2, a processing aid was prepared by adding 7.5 parts of mink wax, 7 parts of stearamide, 16 parts of cetyl alcohol, 5 parts of Zonyl FSN™ fluorosurfactant, 7 parts of polyethylene wax, and 16 parts of zinc stearate to 5.5 parts of X-100™. Next, 12 parts of dodecylbenzene sulfonic acid and 6 parts of SF 1080 methylalkyl silicone resin were added, and the mixture was stirred for one hour at 220°F (115°C). The resulting mixture was sprayed onto 18 parts silicon dioxide, thus forming a dry, free-flowing powder.

1.74 g of the resulting processing aid was added to the rubber compound identified in Example 5, and mixed until a homogenous composition was achieved.

The physical properties of the resultant rubber composition were then determined and are reported in Table 3.

### Comparative Example A

The processing aid of Comparative Example A was prepared employing procedures similar to those described in Example 2. To 5.5 parts of X-100™, 7.5 parts of mink wax, 7 parts of stearamide, 16 parts of cetyl alcohol, 5 parts of Zonyl FSN™ fluorosurfactant, 7 parts of polyethylene wax and 16 parts of zinc stearate were added. Next, 6 parts of SF 1080 silicone resin were added. No dodecylbenzene sulfonic acid was added. The resultant mixture was sprayed onto 30 parts of powdered silica having a particle size of 2 to 5 microns, thus forming a dry, free-flowing powder.

Next, 1.74g of the resultant processing aid was added to the rubber compound identified in Example 6, and mixed until a homogenous composition was achieved.

The physical properties of the resultant rubber composition were then determined, and are reported in Table 3.

### Comparative Example B

### Processing Aid for Elastomers

The processing aid of Comparative Example B was prepared employing procedures similar to those described in Example 2. To 5.5 parts of X-100™, 7.5 parts of mink wax, 7 parts of stearamide, 16 parts of cetyl alcohol, 5 parts of Zonyl FSN™ fluorosurfactant, 7 parts of polyethylene wax, and 16 parts of zinc stearate were added. Next, 4 parts dodecylbenzene sulfonic acid was added. Methylalkyl silicone resin was not added. The resultant mixture was sprayed onto 32 parts silicon dioxide.

Next, 1.74g of the resultant processing aid was added to the rubber composition described in Example 6, and mixed until a homogenous composition was achieved.

The physical properties of the resultant rubber composition were determined, and are reported in Table 3.

### COMPARATIVE EXAMPLE C

### Processing Aid for Elastomers

The processing aid of Comparative Example C was prepared employing procedures similar to those described in Example 2. To 5.5 parts of X-100™, 7.5 parts of mink wax, 7 parts of stearamide, 16 parts of cetyl alcohol, 5 parts of Zonyl FSN™ fluorosurfactant, 7 parts of polyethylene wax, and 16 parts of zinc stearate were added. No dodecylbenzene sulfonic acid or silicone resin were added. The resultant mixture was sprayed onto 36 parts silicone dioxide.

Next, 1.74g of the resultant processing aid were added to the rubber composition described in Example 6 and mixed until a homogenous composition was achieved.

The physical properties of the resultant rubber composition were then determined, and are reported in Table 3.

**Table 3**

| | Examples of Invention | | | Comparative Examples | | | |
|---|---|---|---|---|---|---|---|
| Test | 6 | 7 | 8 | A | B | C | Control* |
| Process Condition: | | | | | | | |
| Mix Time, min | 8 | 9 | 9 | 8 | 8 | 9 | 9 |
| | | | | | | | |
| Dump Temp. °C | 245 | 240 | 245 | 255 | 245 | 245 | 290 |
| | | | | | | | |

| Property: | | | | | | | |
|---|---|---|---|---|---|---|---|
| Scorch at 320°F, (160°C) min | 8 | 8 | 8 | 7 | 8 | 8 | 8 |
| | | | | | | | |
| 100% Cure at 320°F, (160°C) min | 11 | 11 | 11 | 10 | 11 | 11 | 11 |
| | | | | | | | |
| Tensile, psi (MPa) | 3780 | 4010 | 4010 | 3780 | 3790 | 3790 | 3780 |
| | 26MPa | 27.6MPa | 27.6MPa | 26MPa | 26.1MPa | 26.1MPa | 26MPa |
| Modulus @ 100% psi (MPa) | 395 | 410 | 410 | 395 | 400 | 400 | 375 |
| | 2.7MPa | 2.8MPa | 2.8MPa | 2.7MPa | 2.75MPa | 2.75MPa | 2.6MPa |
| Elongation, % | 505 | 525 | 525 | 500 | 505 | 505 | 500 |
| | | | | | | | |
| Shore A Hardness | 66 | 65 | 65 | 66 | 66 | 66 | 66 |
| | | | | | | | |
| Mooney Viscosity | 45 | 40 | 40 | 55 | 47 | 48 | 55 |
| | | | | | | | |
| Dispersion** | very good | excellent | excellent | good | very good | very good | good |
| | | | | | | | |
| Die C Tear | 295 | 320 | 320 | 295 | 300 | 300 | 275 |
| | | | | | | | |
| Release from Mold, gm. | 3360 | 3090 | 3095 | 4790 | 3880 | 3912 | 4782 |
| | | | | | | | |
| Cured Finish (1-10) | 8 | 10 | 10 | 5 | 8 | 7 | 5 |
| | | | | | | | |
| Shine (1-10) | 8 | 10 | 10 | 6 | 6 | 6 | 5 |
| | | | | | | | |
| Adhesion, 1"(2.54cms) strip, lb. | 22 | 23 | 23 | 19 | 21 | 20 | 20 |
| | 10kg | 14.8kg | 14.8kg | 8.6kg | 9.5kg | 9kg | 9kg |
| Uncured Building Tack, Light Wipe With Solvent, gm. | 5240 | 6340 | 6350 | 4960 | 5510 | 5100 | 4900 |
| | | | | | | | |
| Compression Set, %*** | 11 | 8 | 7 | 14 | 13 | 13 | 15 |
| | | | | | | | |
| Oxygen Bomb,**** hr. | 13 | 17 | 17 | 11 | 12 | 11 | 10 |
| | | | | | | | |
| Ozone Test,***** hr. | 14 | 20 | 21 | 13 | 13 | 13 | 12 |

| | | | | | | | |
|---|---|---|---|---|---|---|---|
| * Control was rubber formulation alone without any processing aid. | | | | | | | |
| ** Determined microscopically. | | | | | | | |
| *** ASTM D 395 | | | | | | | |
| **** ASTM D 454 | | | | | | | |
| ***** ASTM D 1148 | | | | | | | |

The results obtained using the processing aids of Examples 6-8 above show that the addition of the processing aid of the present invention to a rubber compound improves its processability, adhesion, tack and physical properties.

Examples 7 and 8, which included processing aids having the greatest amounts of dodecylbenzene sulfonic acid and silicone resin, provided the best results. Namely, tensile strength, elongation, building tack, adhesion, release, finish and shine are improved over the results of Example 6.

Surprisingly improved results are obtained when the processing aid includes the reaction product of an alkylbenzene sulfonic acid and a functionally terminated siloxane. The processing aids of the present invention show many improved physical properties in comparison to Comparative Examples A-C, which omit one or both of the benzene sulfonic acid or the functionally terminated siloxane. The superior physical properties of rubber compounds modified in accordance with the present invention in comparison to an unmodified rubber compound are also clearly shown by comparing Examples 6-8 with the control.

### EXAMPLE 9

A processing aid according to this invention was prepared by mixing 12 parts of dodecylbenzene sulfonic acid and 5 parts of SF 1080 silicone resin, and heating at 878-93°C (190-200°F), with stirring for one hour, with evolution of heat, causing the temperature to rise to 220°F (115°C). The resulting product was then sprayed onto 83 parts of clay having a particle size of 2 to 5 microns, to form a dry, free-flowing powder. This processing aid was then employed in an EPDM cable insulation compound containing 100.00 parts Royalene-512 EPDM, 1.00 parts stearic acid, 5.00 parts zinc oxide, 200.00 parts hard clay, 65.00 parts Sunpar-2280 an extender, oil commercially-available from Sun Oil Co., 3.00 parts mercaptobenzothiazole, 1.00 parts Butazate, a secondary accelerator sold by R. T. Vanderbilt Co., 0.70 parts Tuex, an accelerator sold by R. T. Vanderbilt Co., 0.75 parts sulfur and 3.76 parts of the processing aid.

The compound was prepared by mixing the ingredients in a Banbury mixer at 40 RPM rotor speed, followed by a rubber mill. The processing aid was added two minutes before dumping the batch, while sulfur was added on the mill. For purposes of comparison, three other compounds were prepared: (1) a control with no processing aid; (2) a comparison Batch D with 3.76 parts of docecylbenzene sulfonic acid but no silicone resin sprayed onto clay; and (3) a comparison Batch E with 3.76 parts of silicone resin but no dodecylbenzene sulfonic acid sprayed onto clay. The process conditions and properties of the resulting compounds are summarized in Table 4.

**Table 4**

| | Example | Comparison Batches | | |
|---|---|---|---|---|
| Test | 9 | D | E | Control |
| Process Conditions: | | | | |
| Mixing Time, min. | 8 | 8 | 7 | 8 |
| Dump Temp., °F | 245 (118°C) | 250 (121°C) | 245 (118°C) | 280 (138°C) |

| Property: | | | | |
|---|---|---|---|---|
| Scorch at 320°F, (160°C) min. | 7 | 7 | 7 | 7 |
| 100% Cure at 320°F, (160°C) min. | 10 | 10 | 10 | 10 |
| Tensile, psi (MPa) | 950 (6.5MPa) | 855 (5.9MPa) | 855 (5.9MPa) | 850 (5.8MPa) |
| Modulus at 100%, psi (MPa) | 410 (2.8MPa) | 400 (2.75MPa) | 400 (2.75MPa) | 400 (2.75MPa) |
| Elongation, % | 800 | 790 | 790 | 785 |
| Shore A Hardness | 60 | 60 | 60 | 60 |
| Mooney (ML4) at 212°F (100°C) | 50 | 52 | 51 | 59 |
| Die "C" Tear | 310 | 300 | 300 | 300 |
| Microscopic Dispersion | Excellent | Very Good | Excellent | Poor |
| Interference with Paint Adhesion | None | None | None | None |
| Adhesion, 1" (2.54cms) Strip, lb. | 16 (7kg) | 15 (6.75kg) | 16 (7kg) | 15 (6.75kg) |
| Mold Release, gm. | 3910 | 4850 | 4420 | 5052 |
| Bleed Out, 72 hr. at 182°F (83°C) | None | None | None | None |
| Compression Set* | 12 | 13 | 14 | 17 |
| Oxygen Bomb,** time to crack, hr. | >72 | >72 | >72 | >72 |
| Ozone Test,*** time to crack, hr. | >72 | >72 | >72 | >72 |
| Cured Finish (1-15) | 14 | 7 | 13 | 3 |
| Cured Rubber Shine (1-15) | 14 | 7 | 13 | 3 |
| Uncured Building Tack, Light Wipe With Solvent, gm. | 4910 | 4360 | 4890 | 3675 |

| | | | | |
|---|---|---|---|---|
| * ASTM D-395 - Method B, 1/2" (1.25cms) Disc, 70 hours at 212°F (100°C) | | | | |
| ** ASTM D-454. | | | | |
| *** ASTM D-1148. | | | | |

From the foregoing, it can be seen that thee processing aid of this invention imparted significantly greater improvement to the properties of the EPDM rubber insulation compound than either of its two ingredients. Surprisingly, dodecylbenzene sulfonic acid, which heretofore has been added to rubber in salt form, was found to be effective alone as a processing aid. In particular, it significantly reduced Mooney viscosity and mold release characteristics of the compound.

### EXAMPLE 10

The processing aid of Example 9 was also evaluated in the rubber compound described in Example 6, using 1.75 parts by weight of the processing aid. For purposes of comparison, three other compounds were prepared: (1) a control with no processing aid; (2) a comparison Batch F with 1.75 parts by weight of dodecylbenzene sulfonic acid but no silicone resin on clay; and (3) a comparison Batch G with 1.75 parts by weight of silicone resin but no dodecylbenzene sulfonic acid on clay. The results are summarized in Table 5.

**Table 5**

| | Example | Comparison Examples | | |
|---|---|---|---|---|
| Test | 10 | F | G | Control |
| Process Conditions: | | | | |
| Mixing Time, min. | 9 | 9 | 9 | 9 |
| Dump Temp., °F | 245 (118°C) | 255 (124°C) | 250 (121°C) | 290 (145°C) |

| Properties: | | | | |
|---|---|---|---|---|
| Scorch at 320°F, (160°C) min. | 8 | 8 | 8 | 8 |
| 100% Cure at 320°F, (160°C) min. | 11 | 11 | 11 | 11 |
| Tensile, psi (MPa) | 4010 (27.6MPa) | 3795 (26.2MPa) | 4000 (27.6MPa) | 730 (25.7MPa) |
| Modulus at 100%, psi (MPa) | 410 (2.8MPa) | 400 (2.75MPa) | 400 (2.75MPa) | 395 (2.7MPa) |
| Elongation, % | 520 | 500 | 500 | 500 |
| Shore A Hardness | 66 | 66 | 66 | 66 |
| Mooney (ML4) at 212°F (100°C) | 47 | 51 | 51 | 51 |
| Die "C" Tear | 320 | 295 | 300 | 295 |
| Microscopic Dispersion | Excellent | Very good | Very good | Good |
| Interference With Paint Adhesion | None | None | None | None |
| Adhesion, 1" (2.54cms) Strip, lb. | 21 (9,5kg) | 20 (9kg) | 20 (9kg) | 20 (9kg) |
| Mold Release, gm. | 4010 | 4660 | 4645 | 4990 |
| Bleed Out, 72 hr.at 182°F (83°C) | None | None | None | None |
| Compression Set | 13 | 14 | 14 | 15 |
| Oxygen Bomb, hr. | 16 | 10 | 10 | 10 |
| Ozone Test, hr. | 18 | 12 | 12 | 12 |
| Cured Finish (1-15) | 14 | 6 | 13 | 5 |
| Cured Rubber Shine (1-15) | 14 | 6 | 13 | 5 |
| Uncured Building Tack, Light Wipe With Solvent, gm. | 5860 | 5010 | 5034 | 4965 |

Once again, the processing aid of this invention achieved a greater improvement in properties when compared with either of its ingredients. Also once again, the blend of dodecylbenzene sulfonic acid and silicone fluid surprisingly demonstrated utility as a processing aid.

As is apparent from Examples 9 and 10, the blend of dodecylbenzene sulfonic acid and silicone fluid has utility as a processing aid, causing substantial reduction in Mooney viscosity and improving dispersion of the rubber compound. This was a very surprising discovery because heretofore alkylbenzene sulfonic acids have not been added in acid form. Rather, they had been added as salts, e.g., alkali metal or amine salts. It was assumed that only salts could be used because the free acid would be unsafe, and cause corrosion to processing equipment.

The use of free dodecylbenzene sulfonic acid or other alkylbenzene sulfonic acid is therefore a practical alternative to the use of salts. It is believed that the mechanism by which the viscosity of rubber is lowered by dodecylbenzene sulfonic acid is due to its capacity to attack and split rubber bonds, as well as its capacity to act as a plasticizer. Its plasticizing and lubricating effect is demonstrated by reduced values for grams necessary to release the rubber from the mold, surface appearance, etc., compared with the control.

When compared with the partially neutralized acid of the prior art, the unmodified acid shows higher activity in breaking down the rubber.

Whatever the mechanism, however, processing and physical properties are improved by the use of free alkylbenzene sulfonic acid, e.g., dodecylbenzene sulfonic acid in an amount that ranges from about 3 to about 25 parts by weight per hundred parts of rubber compound. Similar and related acids within the scope of formula (I) are equally effective.

While the alkylbenzene sulfonic acid and silicone lubricant may be added alone, they also may be combined with other compounds previously used as components of processing aids, providing they are essentially inert under ambient conditions, i.e., they do not significantly react with or neutralize the alkylbenzene sulfonic acid under ambient conditions. Such additives include compounds with alcoholic groups, including glycolic hydroxyl groups, fatty acids and their esters, fatty acid amides, wetting agents, waxes, fluorosurfactants and inert fillers, all as discussed above.

All of the above percentages and parts are by weight unless otherwise indicated.

### EXAMPLE 11

The effects of three types of pure silicone fluids on rubber compounds were compared to the effects of the same silicone fluids used in conjunction with a peptizing agent in accordance with the invention. Sample No. 1 was a pure methylalkyl silicone fluid (Silicone 1080 from General Electric). Sample No. 2 was a pure polydimethylsiloxane (molecular weight of 10,000) (Viscacil 10M from General Electric). Sample No. 3 was a pure polydimethylsiloxane (molecular weight of 100,000) (Viscacil 30M from General Electric).

Samples Nos. 4-7 were based on the following base formula:
5.5 Parts X-100™
7.5 Parts Mink Wax
7 Parts Stearamide
16 Parts Cetyl Alcohol
5 Parts Zonyl FSN (Fluorosurfactant)
7 Parts Polyethylene Wax
The X-100™ was prepared as in Example 1. Sample No. 4 also included a processing aid comprising a mixture of Silicone 1080 resin, dodecylbenzene sulfonic acid, plasticizers and surfactants. Sample No. 5 included a mixture of Silicone 1080 peptizers, plasticizers and surfactants. Sample No. 6 included a mixture of polydimethylsiloxanes, peptizers, plasticizers and surfactants. Sample No. 7 included a mixture of Silicone 1080, plasticizers and surfactants. The results are reported in the following Table 6.

It can be seen from the results that the three rubbers treated with the processing aids of the invention (i.e., Samples 4-6) exhibited much better dispersion than the control and the other samples. In addition, the rubbers in accordance with the invention exhibited greater resistance to oxygen and ozone degradation than the other samples. On the average, the rubber in accordance with the invention also exhibited better releasability (as measured by the number of grams to release it from the mold) than the other samples. Furthermore, it can be seen that the processing aid of the invention reduced the Mooney viscosity of the rubber samples thereby facilitating mixing and processing.

It can also be seen from the results reported in the table that the physical properties of the three rubber samples (Nos. 4-7) were not adversely affected, notwithstanding the fact that they were formulated with a silicone lubricant. In fact, it was suprising to discover that, on the average, the tensile strength, modulus, elongation percent and adhesion of the rubber samples in accordance with the invention were actually better than the corresponding properties in the control.

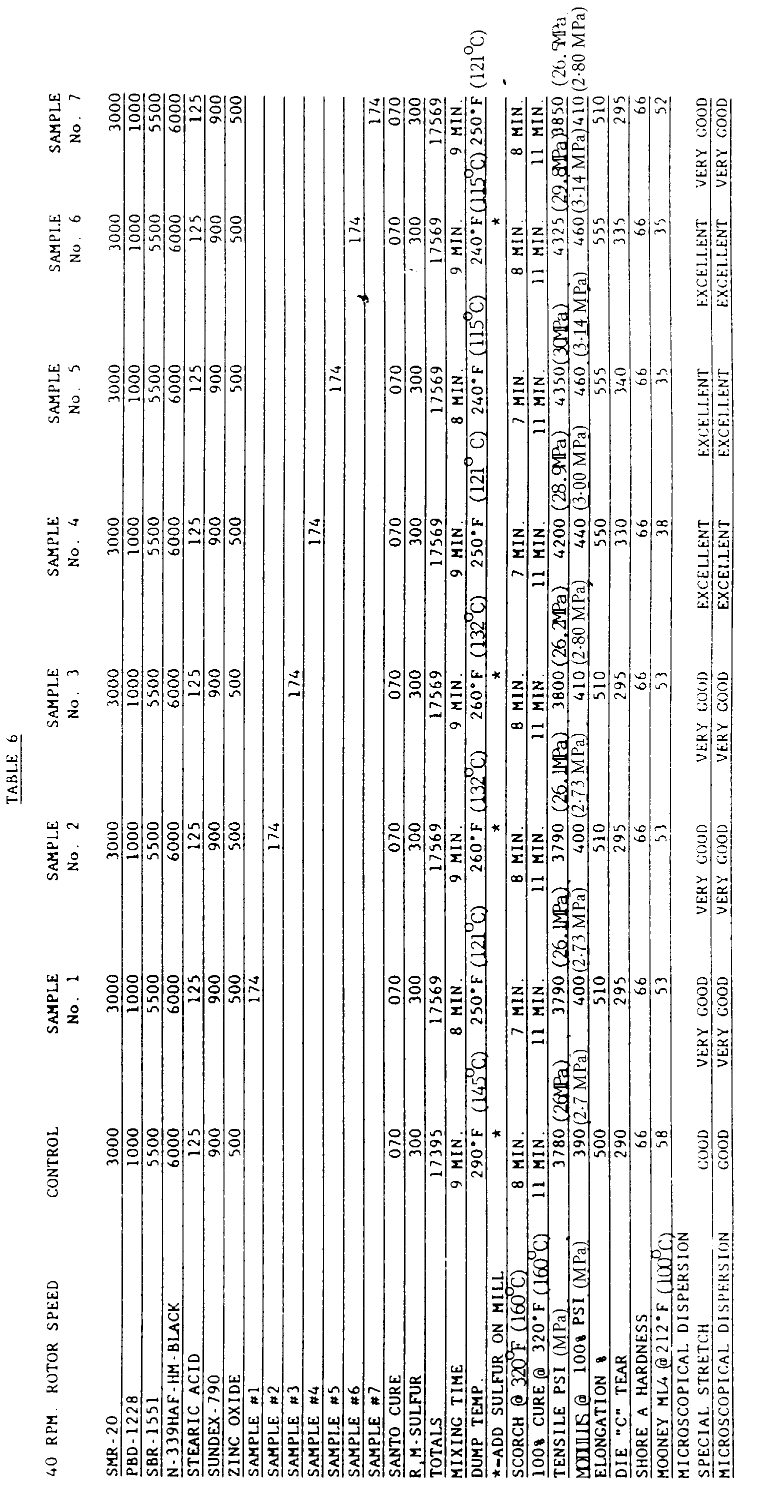

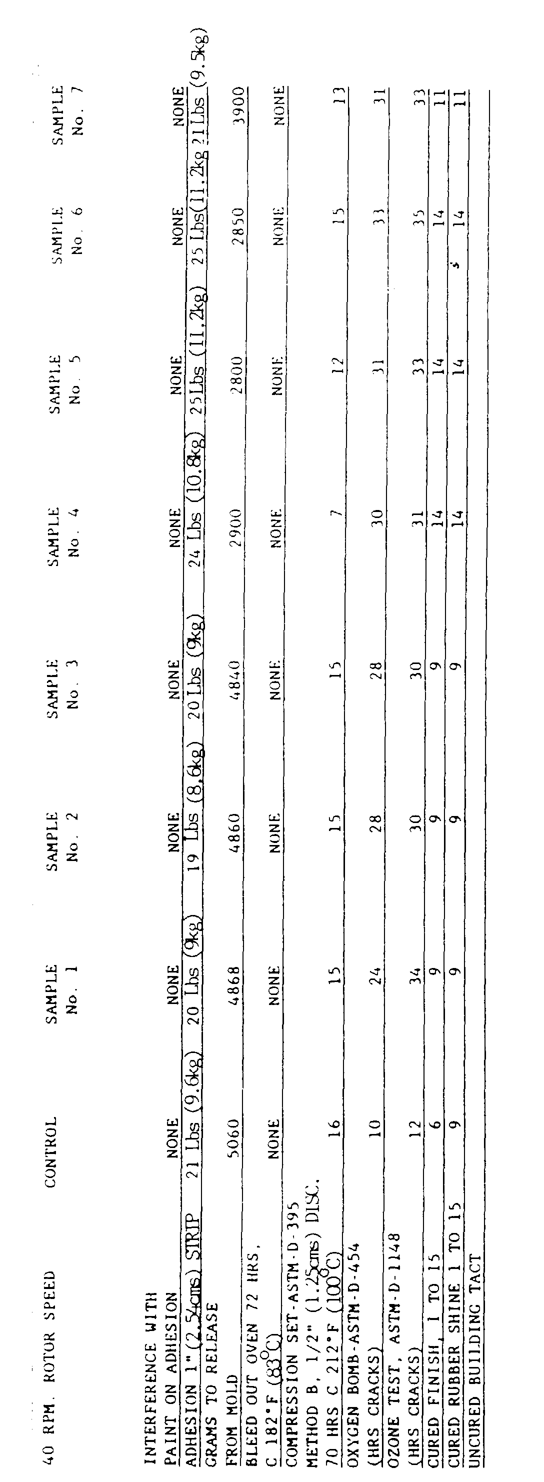

## Claims

1. A processing aid for lubricating and improving the processability of a rubber compound which comprises a preformed mixture of a silicone fluid lubricating agent and a peptizing agent selected from alkylbenzene sulfonic acids of formula 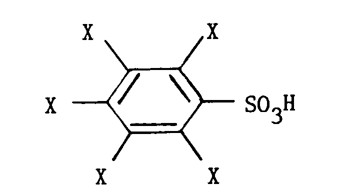 (wherein each X is independently hydrogen or a straight or branched chain alkyl group having from 4 to 14 carbon atoms, at least one of the substituents X being alkyl), thiazole accelerators, phenyl hydrazine and derivatives thereof, alkyl and aryl mercaptans, dithio-bisbenzanilides and N-tallow alkyltrimethylenediamine oleates, to render the lubricating agent compatible with the rubber to which the processing aid is to be added.

2. A processing aid according to claim 1 wherein the lubricant is a trimethylsiloxy terminated polydimethylsiloxane having a viscosity of from 5000 to 60000 centistokes (5 to 60 Pa.s).

3. A processing aid according to claim 1 or claim 2 wherein the lubricant is a functionally terminated silicone of the formula
R¹-{Si(R²R³)O}ₓ-R⁴
where R¹ - R⁴ are independently hydrocarbyl or hydrocarboxy, with the proviso that at least one of the R¹ - R⁴ groups is substituted by a functional group capable of reacting with a sulfonic acid, and x is an integer.

4. A processing aid according to any preceding claim wherein the alkylbenzene sulfonic acid has the formula 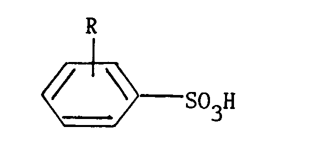 where R is C₈ - C₁₂ alkyl.

5. A processing aid according to any preceding claim wherein the peptizing agent is mercaptobenzothiazole, cyclohexybenzothiazole sulphenamide, phenyl hydrazine, thio-β-naphthol, xylyl mercaptan, pentacholorothiophenol, zinc pentacholorothiophenate, dodecylbenzene sulfonic acid, dithio-bisbenzanilide, or an N-tallow alkyltrimethylenediamine oleate.

6. A processing aid according to any preceding claim further containing a salt of a long chain fatty acid having from 14 to 22 carbon atoms.

7. A processing aid according to claim 6, wherein the salt is a zinc salt of oleic, stearic or palmitic acid.

8. A processing aid according to any preceding claim wherein the ratio of lubricating agent to peptizing agent is from 1:0.2 to 3:0.2 by weight.

9. A processing aid according to any preceding claim further containing a carrier comprising clay and/or silicon dioxide.

10. A processing aid according to any preceding claim further containing a natural or synthetic wax.

11. A processing aid according to claim 10 wherein the wax is a paraffin or polyethylene wax.

12. A method for processing a rubber compound which comprises mixing a processing aid according to any preceding claim with the rubber compound to form a homogeneous composition and curing the resulting composition.

## Patentansprüche

1. Verfahrenshilfsmittel zum Schmieren und Verbessern der Verarbeitbarkeit einer Kautschukverbindung, welches ein vorgeformtes Gemisch eines Silikon-Fluidschmiermittels und eines Peptisiermittels, das unter Alkylbenzolsulfonsäuren der Formel 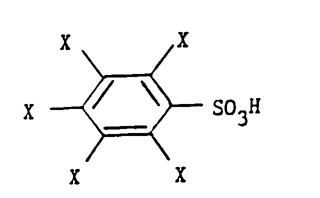 (worin jedes X unabhängig von den anderen Wasserstoff oder eine geradkettige oder verzweigtkettige Alkylgruppe mit 4 bis 14 Kohlenstoffatomen ist, wobei wenigstens einer der Substituenten X Alkyl ist), Thiazolbeschleunigern, Phenylhydrazin und Derivaten desselben, Alkyl- und Arylmercaptan, Dithiobisbenzaniliden und N-Talgalkyltrimethylendiaminoleaten ausgewählt ist, umfaßt, um das Schmiermittel mit dem Kautschuk verträglich zu machen, welchem das Verfahrenshilfsmittel zugesetzt werden soll.

2. Verfahrenshilfsmittel nach Anspruch 1, worin das Schmiermittel ein Polydimethylsiloxan mit Trimethylsiloxyendgruppen und mit einer Viskosität von 5000 bis 60 000 Centistokes (5 bis 60 Pa.s) ist.

3. Verfahrenshilfsmittel nach Anspruch 1 oder Anspruch 2, worin das Schmiermittel ein Silikon mit funktionellen Endgruppen mit der Formel
R¹-{Si(R²R³)O}ₓ-R⁴
ist, worin R¹ bis R⁴ unabhängig voneinander Hydrocarbyl- oder Hydrocarboxygruppen sind, wobei wenigstens eine der Gruppen R¹ bis R⁴ durch eine funktionelle Gruppe substituiert ist, die mit einer Sulfonsäure reagieren kann, und x eine ganze Zahl ist.

4. Verfahrenshilfsmittel nach einem der vorausgehenden Ansprüche, worin die Alkylbenzolsulfonsäure die Formel 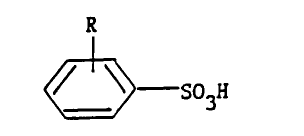 hat, worin R C₈- bis C₁₂-Alkyl ist.

5. Verfahrenshilfsmittel nach einem der vorausgehenden Ansprüche, worin das Peptisiermittel Mercaptobenzothiazol, Cyclohexylbenzothiazolsulfenamid, Phenylhydrazin, Thio-β-naphthol, Xylylmercaptan, Pentachlorthiophenol, Zinkpentachlorthiophenat, Dodecylbenzolsulfonsäure, Dithiobisbenzanilid oder ein N-Talgalkyltrimethylendiaminoleat ist.

6. Verfahrenshilfsmittel nach einem der vorausgehenden Ansprüche weiterhin mit einem Gehalt eines Salzes einer langkettigen Fettsäure mit 14 bis 22 Kohlenstoffatomen.

7. Verfahrenshilfsmittel nach Anspruch 6, worin das Salz ein Zinksalz von Ölsäure, Stearinsäure oder Palmitinsäure ist.

8. Verfahrenshilfsmittel nach einem der vorausgehenden Ansprüche, worin das Gewichtsverhältnis von Schmiermittel zu Peptisiermittel 1 : 0,2 bis 3 : 0,2 ist.

9. Verfahrenshilfsmittel nach einem der vorausgehenden Ansprüche weiterhin mit einem Gehalt eines Trägers, der Ton und/oder Siliciumdioxid umfaßt.

10. Verfahrenshilfsmittel nach einem der vorausgehenden Ansprüche weiterhin mit einem Gehalt eines natürlichen oder synthetischen Wachses.

11. Verfahrenshilfsmittel nach Anspruch 10, worin das Wachs Paraffin- oder Polyethylenwachs ist.

12. Verfahren zur Verarbeitung einer Kautschukverbindung unter Vermischen eines Verfahrenshilfsmittels nach einem der vorausgehenden Ansprüche mit der Kautschukverbindung, um eine homogene Zusammensetzung zu bilden, und Härtung der resultierenden Zusammensetzung.

## Revendications

1. Auxiliaire de traitement pour la lubrification et l'amélioration de l'aptitude au traitement d'un composé caoutchouteux comprenant un mélange préformé d'un agent lubrifiant fluide à base de silicone et d'un agent peptisant choisi parmi les acides alkylbenzène-sulfoniques de formule 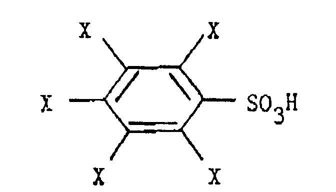 (où chaque X est indépendamment un atome d'hydrogène ou un groupe alkyle à chaîne linéaire ou ramifiée, ayant de 4 à 14 atomes de carbone, au moins un des substituants X étant un groupe alkyle), les accélérateurs thiazoles, la phénylhydrazine et ses dérivés, les alkyl- et arylmercaptans, les dithiobisbenzanilides et les oléates de N-suif-alkyltriméthylènediamines, pour rendre l'agent lubrifiant compatible avec le caoutchouc auquel on doit ajouter l'auxiliaire de traitement.

2. Auxiliaire de traitement selon la revendication 1, dans lequel le lubrifiant est un polydiméthylsiloxane à terminaison triméthylsiloxy, ayant une vicosité de 5000 à 60000 centistokes (5 à 60 Pa.s).

3. Auxiliaire de traitement selon la revendication 1 ou la revendication 2, dans lequel le lubrifiant est une silicone à terminaison fonctionnelle répondant à la formule
R¹-{Si(R²R³)O}ₓ-R⁴
où R¹ à R⁴ sont indépendamment des groupes hydrocarbyles ou hydrocarboxy, à la condition qu'au moins un des groupes R¹ à R⁴ soit substitué par un groupe fonctionnel capable de réagir avec un acide sulfonique, et x est un nombre entier.

4. Auxiliaire de traitement selon l'une quelconque des revendications précédentes, dans lequel l'acide alkylbenzène-sulfonique répond à la formule 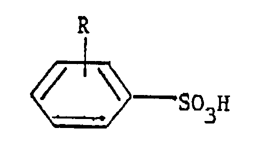 où R est un groupe alkyle en C₈-C₁₂.

5. Auxiliaire de traitement selon l'une quelconque des revendications précédentes, dans lequel l'agent peptisant est le mercaptobenzothiazole, le sulfamide de cyclohexylbenzothiazole, la phénylhydrazine, le thio-β-naphtol, le xylylmercaptan, le pentachlorothiophénol, le pentachlorothiophénate de zinc, l'acide dodécylbenzène-sulfonique, le dithio-bisbenzanilide ou un oléate de N-suif-alkyltriméthylènediamine.

6. Auxiliaire de traitement selon l'une quelconque des revendications précédentes, contenant, en outre, un sel d'un acide gras à chaîne longue ayant de 14 à 22 atomes de carbone.

7. Auxiliaire de traitement selon la revendication 6, dans lequel le sel est un sel de zinc de l'acide oléique, stéarique ou palmitique.

8. Auxiliaire de traitement selon l'une quelconque des revendications précédentes, dans lequel le rapport de l'agent lubrifiant à l'agent peptisant est de 1:0,2 à 3:0,2 en poids.

9. Auxiliaire de traitement selon l'une quelconque des revendications précédentes, contenant, en outre, un support constitué d'argile et/ou de dioxyde de silicium.

10. Auxiliaire de traitement selon l'une quelconque des revendications précédentes, contenant, en outre, une cire naturelle ou synthétique.

11. Auxiliaire de traitement selon la revendication 10, dans lequel la cire est une cire de paraffine ou de polyéthylène.

12. Procédé de traitement d'un composé caoutchouteux, comprenant le mélange d'un auxiliaire de traitement selon l'une quelconque des revendications précédentes avec le composé caoutchouteux pour former une composition homogène et le durcissement de la composition résultante.
